(19) Europäisches Patentamt / European Patent Office / Office européen des brevets

(11) **EP 3 782 103 B1**

(12) **FASCICULE DE BREVET EUROPEEN**

(45) Date de publication et mention de la délivrance du brevet:
**08.10.2025 Bulletin 2025/41**

(21) Numéro de dépôt: **19716179.7**

(22) Date de dépôt: **11.04.2019**

(51) Classification Internationale des Brevets (IPC):
*G06Q 20/20* (2012.01)    *G06Q 20/34* (2012.01)
*G06Q 20/32* (2012.01)    *G07F 7/08* (2006.01)
*G06N 7/00* (2023.01)    *G06N 3/02* (2006.01)
*G06N 5/04* (2023.01)    *G06V 10/22* (2022.01)
*G06V 30/40* (2022.01)    *G06V 40/10* (2022.01)

(52) Classification Coopérative des Brevets (CPC):
**G06Q 20/20; G06Q 20/204; G06Q 20/3278;
G06Q 20/34; G06Q 20/352; G06Q 20/356;
G06V 10/22; G06V 30/40; G06V 40/107;
G07F 7/0873; G07F 7/088; G07F 7/0893;**
G06N 3/02; G06N 5/04; G06N 7/01;    (Cont.)

(86) Numéro de dépôt international:
**PCT/EP2019/059346**

(87) Numéro de publication internationale:
**WO 2019/201754 (24.10.2019 Gazette 2019/43)**

(54) **DISPOSITIF DE DÉTERMINATION D'UN DISPOSITIF TRANSACTIONNEL, PROCÉDÉ ET PROGRAMME D'ORDINATEUR CORRESPONDANT**

VORRICHTUNG ZUR BESTIMMUNG EINER TRANSAKTIONSVORRICHTUNG, VERFAHREN UND ENTSPRECHENDES COMPUTERPROGRAMM

DEVICE FOR DETERMINING A TRANSACTIONAL DEVICE, METHOD AND CORRESPONDING COMPUTER PROGRAM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.04.2018 FR 1853526**

(43) Date de publication de la demande:
**24.02.2021 Bulletin 2021/08**

(73) Titulaire: **Banks and Acquirers International Holding**
**75015 Paris (FR)**

(72) Inventeur: **MARSAUD, Thierry**
**33400 TALENCE (FR)**

(74) Mandataire: **Germain Maureau**
**12, rue Boileau**
**69006 Lyon (FR)**

(56) Documents cités:
EP-A1- 2 128 789     WO-A1-2015/158621
US-A1- 2018 033 000     US-B1- 7 757 942

(52) Classification Coopérative des Brevets (CPC):
(Cont.)G06V 2201/09

**Description**

1. Domaine

Le domaine de l'invention est celui des dispositifs de lecture de carte.

Plus précisément, l'invention concerne une technique de sélection d'un mode de communication à utiliser pour communiquer avec un dispositif transactionnel (carte, terminal de type montre ou smartphone).

L'invention a de nombreuses applications, telles que par exemple dans le domaine de la monétique (i.e. des terminaux de paiement bancaires), ou des titres de transport.

Plus généralement, elle peut s'appliquer dans tous les cas où il est nécessaire de communiquer avec une carte de manière optimale.

2. Arrière-plan technologique

On s'attache plus particulièrement dans la suite de ce document à décrire la problématique existante dans le domaine des terminaux bancaires, à laquelle ont été confrontés les inventeurs. L'invention ne se limite bien sûr pas à ce domaine particulier d'application, mais présente un intérêt pour toute technique de lecture de carte à puces devant faire face à une problématique proche ou similaire

La norme EMVco (pour « Europay, MasterCard, Visa and co ») prévoit la possibilité qu'une carte à puce et un terminal puissent posséder une pluralité de mode de communications. Ainsi, un terminal (tel qu'un terminal de paiement ou un simple lecteur de carte) peut comprendre différents moyens de communication nécessitant un contact physique avec une carte (via par exemple une piste magnétique, ou un micromodule appelé puce), ainsi que différents moyens de communication sans contact (compatibles avec les normes liées à la NFC (pour « Near Field Communication ») ou au RFID (pour « Radio frequency identification »), qui fonctionnent de manière séparée.

Ainsi, un tel terminal ou un tel lecteur doit être capable, en fonction du dispositif présenté, de sélectionner le mode de communication adéquat (et donc les moyens de communication correspondants) pour réaliser une transaction.

De manière classique, lorsque la carte présentée est insérée dans une première fente de lecture du terminal, celui-ci sélectionne de manière implicite des premiers moyens de communication avec contact (via un micromodule). Lorsque la carte présentée est insérée dans une deuxième fente de lecture du terminal, comprenant une tête magnétique, celui-ci sélectionne de manière implicite des deuxièmes moyens de communication avec contact (tête de lecture magnétique). Enfin, lorsque la carte présentée est à proximité (de l'ordre de quelques centimètres) d'un émetteur d'un module de communication sans contact (et plus précisément dans la zone de rayonnement d'un tel émetteur), et que la carte transmet une réponse suite à l'activation de moyens de communication sans contact à destination du dispositif, celui-ci sélectionne un module de communication sans contact pour communiquer avec la carte présentée.

Ainsi, pour permettre une telle sélection, les moyens de communication sans contact du dispositif sont souvent activés en permanence (ou bien ils sont activés à intervalles réguliers, comme par exemple dans la demande de brevet US20120104094, dans laquelle les moyens de communication sans contact sont utilisés en émettant des impulsions courtes pour tenter de détecter la présence d'une carte).

Or, lorsqu'un utilisateur souhaite insérer une carte mixte (i.e. une carte comprenant un module de communication avec contact, ainsi que sans contact) dans la première ou la deuxième fente de lecture, il se peut qu'il passe la carte mixte à proximité de l'émetteur du dispositif durant cette phase d'approche de l'une des fentes, et que la carte mixte engage une transaction avant qu'elle ne soit positionnée dans l'une des fentes. Le terminal peut alors générer une erreur car il n'est généralement pas autorisé à traiter simultanément deux « lectures » de cartes. Ainsi, lorsque la carte mixte passe à proximité de l'émetteur sans contact du dispositif, l'énergie fournit par le champ électromagnétique de l'émetteur du dispositif active les moyens de communication sans contact de la carte mixte. Puis la carte mixte transmet une information spécifiant qu'elle peut réaliser une transaction électronique, via les moyens de communication sans contact. C'est à partir de la réception par le dispositif d'une telle information que le temps global d'une transaction est suivi par le dispositif. Ainsi, un inconvénient d'une telle technique réside dans le fait qu'au temps global d'une transaction s'ajoute un temps additionnel résultant de l'activation et de l'envoi, par la carte mixte, d'une information spécifiant qu'elle peut réaliser une transaction électronique, via les moyens de communication sans contact.

Un autre inconvénient lié à une activation en permanence d'un module de communication sans contact du terminal, réside dans le fait que le terminal a besoin d'une alimentation énergétique importante (*découlant du surcroît de consommation induit par le fonctionnement en permanence un module de communication sans contact du dispositif*), ce qui entraine des contraintes de dimensionnement des alimentations d'un tel dispositif, ainsi que des problèmes d'échauffement et d'autonomie pour des terminaux portables.

Un autre inconvénient lié à ce mode opératoire est que des nouveaux moyens de paiement (par exemple smartphone, montre connectée) ont fait leur apparition et que la manière de gérer des transactions avec ces types de terminaux peut être différente de celle des moyens de paiement classique (carte de paiement). Il est donc nécessaire de disposer d'un dispositif qui soit en mesure de proposer des solutions à ces différentes moyens et manières de réaliser un paiement. Le document de brevet FR1262728 divulgue une méthode dans laquelle un capteur détecte la position d'une carte afin d'activer ou non une interface de communication sans contact. Une telle méthode est cependant limitée à une détection de présence (absence) et n'est pas nécessairement adaptée aux nouveaux usages de paiement, notamment à l'aide des terminaux précédemment mentionnés ou encore à l'aide de comptes de fidélité (carte dite « loyalty »), lesquels font l'objet de traitements particuliers, non anticipés dans FR1262728, qui quels que soient les moyens décrits se contente de proposer une détection de carte. Dès lors, malgré la technique décrite dans FR1262728, dont notamment l'utilisation d'un capteur optique pour la détection de présence, il reste nécessaire, pour le gestionnaire du dispositif (par exemple le commerçant) d'effectuer un certain nombre d'opérations de sélection sur le dispositif afin de permettre le paiement, ce qui a pour conséquence de ralentir le processus transactionnel.

3. Résumé

Les inventeurs ont tenu compte des problématiques posées par les dispositifs de l'art antérieur pour proposer une nouvelle technique d'identification de dispositif transactionnel ou de paiement (carte, terminal de communication) qui permette de basculer automatiquement vers un mode adapté au dispositif transactionnel.

Dans un mode de réalisation particulier de l'invention, il est proposé un procédé de détermination d'un type de dispositif transactionnel utilisé par un utilisateur pour effectuer une transaction de paiement avec un terminal de paiement, le procédé étant mis en œuvre par le terminal de paiement comprenant un processeur de traitement de données, une mémoire, un capteur optique, et un ensemble d'une pluralité d'interfaces physiques de paiement. Un tel procédé comprend :

- une étape d'obtention d'au moins un enregistrement d'au moins une image issue du capteur optique, ledit enregistrement étant obtenu lorsque l'utilisateur maintient un dispositif transactionnel en main;
- une étape de détermination de scores de confiance relatifs à chaque interface physique de paiement en fonction d'éléments présents dans l'enregistrement, chacun des scores de confiance représentant une valeur de probabilité de volonté d'utiliser ladite interface physique de paiement par l'utilisateur tenant le dispositif transactionnel en main ; et
- au moins une étape d'activation d'au moins une interface physique de l'ensemble d'interfaces physiques, en fonction desdits scores, de la valeur la plus importante à la valeur la plus faible.

Ainsi, l'invention permet de déterminer un ordre d'activation des interfaces transactionnelles du terminal en fonction de ce qui est perçu par celui-ci. L'invention permet donc de sécuriser la transaction d'une part en assurant qu'une seule interface est activée à la fois et d'autre part en déterminant au mieux l'intention de l'utilisateur qui tient le dispositif transactionnel en main.

Ainsi, l'invention permet de laisser une certaine latitude à l'utilisateur, en ne verrouillant pas accidentellement le terminal sur une interface donnée alors que celle-ci n'a pas été sélectionnée par l'utilisateur.

Selon un mode de réalisation particulier, la détermination des scores de confiance comprend au moins une des étapes suivantes :

- détermination d'un premier score de confiance associé à un nombre de portions de doigts présents sur au moins un enregistrement issu du capteur optique ; et
- détermination d'un second score de confiance associé à au moins une caractéristique de dispositif transactionnel.

Ainsi, le score de confiance est multi-formé. Il présente donc l'avantage d'intégrer plusieurs paramètres dans sa composition et donc d'être moins sensible aux erreurs. Il peut ainsi délivrer des résultats plus fiables et donc permettre l'activation de l'interface physique la plus probable.

Selon une caractéristique particulière, l'étape de détermination du premier score de confiance comprend, pour une image courante de l'enregistrement et pour une entrée courante d'une structure de données d'activation d'interfaces transactionnelles :

- la détermination d'un nombre de portions de doigts présents sur ladite image courante, délivrant une première valeur de nombre de portions de doigts ;
- la détermination d'une position de portions de doigts présents sur ladite image courante délivrant une deuxième valeur de position de portions de doigts ; et
- l'affectation du premier score à l'entrée courante de la structure de données d'activation d'interfaces physiques en fonction des première et deuxième valeurs précédemment déterminées.

Selon un mode de réalisation particulier, la détermination du premier score de confiance associé au nombre de portions de doigts présents sur au moins un enregistrement issu du capteur optique met en œuvre au moins un réseau de neurones préalablement entrainé.

Selon un mode de réalisation particulier, la détermination du premier score de confiance associé au nombre de portions de doigts présents sur au moins un enregistrement issu du capteur optique met en œuvre au moins un gabarit de reconnaissance.

Selon une caractéristique particulière, l'étape de détermination du second score de confiance comprend, pour une image courante de l'enregistrement :

- le prétraitement de l'image courante délivrant une image prétraitée ;

- l'obtention, parmi un ensemble de caractéristiques, d'au moins une caractéristique à rechercher ; et
- la recherche de ladite au moins une caractéristique sur ladite image prétraitée délivrant au moins une valeur représentative de la présence de ladite au moins une caractéristique au sein de ladite image courante.

Dans un autre mode de réalisation, l'invention se rapporte également à un dispositif de détermination d'un type de dispositif transactionnel utilisé par un utilisateur pour effectuer une transaction, le dispositif de détermination étant configuré pour mettre en œuvre le procédé tel que précédemment défini, et comprenant un processeur de traitement de données, une mémoire, un capteur optique et un ensemble d'une pluralité d'interfaces physiques de transaction.

Un tel dispositif peut comprendre :

- au moins un module d'obtention d'au moins un enregistrement d'au moins une image issue du capteur optique, ledit enregistrement étant obtenu lorsque l'utilisateur maintient un dispositif transactionnel en main ;
- un module de détermination de scores de confiance en fonction d'éléments présents dans l'enregistrement, chacun des scores de confiance étant associé à au moins une interface physique de l'ensemble d'interfaces physiques ;
- un module d'activation d'au moins une interface physique de l'ensemble d'interfaces physiques en fonction desdits scores, de la valeur la plus importante à la valeur la plus faible.

Un tel dispositif peut comprendre par ailleurs tous les moyens de mis en œuvre en œuvre des caractéristiques secondaires précédemment présenté, sous la forme de composant matériels dédiés, tels que des FPGA ou toute autre technique appropriée.

Dans un mode de réalisation, un tel dispositif est intégré au sein d'un terminal de paiement afin de permettre à celui-ci de sélectionner l'interface transactionnel à activer lors d'une transaction de paiement. Selon un mode de réalisation particulier, le dispositif est le terminal de paiement.

Dans un autre mode de réalisation de l'invention, il est proposé un produit programme d'ordinateur téléchargeable depuis un réseau de communication et/ou stocké sur un support lisible par ordinateur et/ou exécutable par un microprocesseur, le programme comprenant des instructions de code de programme qui, lorsqu'elles sont exécutées par un processeur, mettent en œuvre le procédé précité (dans l'un quelconque de ses différents modes de réalisation).

Dans un autre mode de réalisation de l'invention, il est proposé un médium de stockage lisible par ordinateur et non transitoire, stockant un programme d'ordinateur comprenant un jeu d'instructions exécutables par un ordinateur pour mettre en œuvre le procédé précité (dans l'un quelconque de ses différents modes de réalisation).

Selon un mode de réalisation, l'invention est mise en œuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en œuvre une fonction ou un ensemble de fonctions, selon ce qui est décrit ci-dessous pour le module concerné. Un tel composant logiciel est exécuté par un processeur de données d'une entité physique (terminal, serveur, passerelle, set-top-box, routeur, etc.) et est susceptible d'accéder aux ressources matérielles de cette entité physique (mémoires, supports d'enregistrement, bus de communication, cartes électroniques d'entrées/sorties, interfaces utilisateur, etc.).

De la même manière, un composant matériel correspond à tout élément d'un ensemble matériel (ou hardware) apte à mettre en œuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

4. Figures

D'autres caractéristiques et avantages de l'invention apparaîtront à la lecture de la description suivante, donnée à titre d'exemple indicatif et non limitatif, et des dessins annexés, dans lesquels :

- la figure 1A explicite les différentes étapes de la méthode de caractérisation ;
- la figure 1B explicite les différentes étapes de la méthode de caractérisation, dans un mode de réalisation particulier ;
- la figure 2 décrit les étapes mise en œuvre pour la reconnaissance d'un nombre de doigts maintenant le dispositif transactionnel ;
- la figure 3 explicite les étape de détermination d'un type de dispositif transactionnel ;
- la figure 4 présente succinctement un dispositif de caractérisation, dans lequel la présente invention peut être mise en œuvre ;

5. Description détaillée

5.1. Principe général

Sur toutes les figures du présent document, les éléments et étapes identiques sont désignés par une même référence numérique.

Le principe général de la technique proposée consiste à permettre au terminal (par exemple terminal de paiement ou tout autre type de terminal multi technologies) de réaliser une sélection automatique de l'interface transactionnelle à utiliser en fonction de la perception, par le terminal, du geste effectué et/ou du dispositif transactionnel détenu par l'utilisateur. Pour un terminal de paiement, il s'agit de déterminer l'interface transactionnelle à utiliser pour pouvoir effectuer le règlement des achats de l'utilisateur, et ainsi rendre l'opération de paiement plus simple et plus rapide, en évitant au commerçant d'avoir à sélectionner le mode de paiement utilisé par l'utilisateur. Plus particulièrement, le terminal est muni de moyens permettant de reconnaitre le dispositif transactionnel (carte à puce, sans contact, magnétique, smartphone, montre) qui est utilisé par l'utilisateur (pour effectuer le paiement par exemple), et ce de manière automatique, sans que le commerçant n'ait à intervenir sur le terminal de paiement.

Un procédé de détection du moyen de paiement selon la présente technique est décrit par la suite. Ce procédé se base sur la détermination d'un score de confiance relatif à un moyen de paiement présenté au terminal de paiement. Un score de confiance est déterminé pour un certain nombre de cas de figure attendus, chaque cas de figure correspondant à une interface transactionnelle à activer pour effectuer la transaction : par exemple un score de confiance est attribué au paiement par carte à puce (interface transactionnelle : lecteur de carte à puce), un score pour un paiement sans contact (interface transactionnelle : lecteur sans contact), etc. La détermination du score de confiance est au moins en partie basée sur l'obtention d'un ou plusieurs enregistrements (images/vidéo) en provenance d'un capteur optique placé sur le terminal, par exemple à proximité de l'écran de celui-ci. Des images (et/ou vidéos) sont obtenues, caractérisées par rapport aux cas de figure attendus (aux interfaces transactionnelles à activer) et un score de confiance est attribué à chaque interface transactionnelle (en fonction des éléments présents dans les enregistrements). Les scores de confiances sont ensuite utilisés, de la valeur la plus importante à la plus faible, pour activer sélectivement (les unes à la suite) les interfaces transactionnelles du terminal.

Dès lors, on résout plusieurs problèmes précédemment rencontrés avec les techniques antérieures : le commerçant n'agit pas sur le terminal pour sélectionner le moyen de paiement ; les interfaces de paiement ne sont pas activées toutes en même temps, réduisant ainsi les problématiques de consommation électrique et les problématiques sécuritaires (consistant à utiliser abusivement une interface au détriment d'une autre par exemple, voire des méthodes plus sophistiquées de vol de données personnelles et confidentielles).

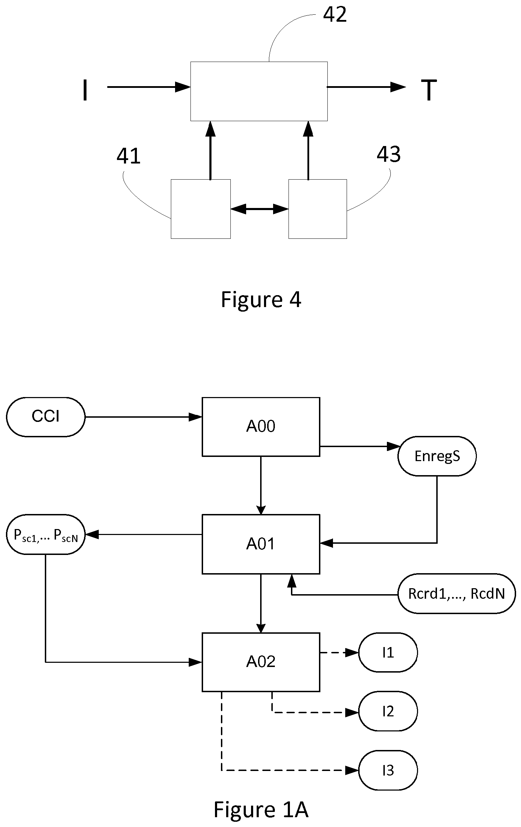

Plus particulièrement, en relation avec la figure 1A, la méthode comprend :

- une étape d'obtention (A00) d'au moins un enregistrement (EnregS) issu du capteur optique (CCI), ledit enregistrement étant obtenu lorsqu'un utilisateur maintien ledit dispositif transactionnel en main ;
- une étape de détermination (A01) d'au moins un score de confiance ($P_{sc1}$,...$P_{scN}$), ledit au moins un score de confiance ($P_{sc1}$,... $P_{scN}$) étant associé à au moins une entrée (Rcrd1,..., RcdN) correspondante d'une structure de données d'activation d'interfaces transactionnelles présentes au sein dudit dispositif électronique ;
- au moins une étape d'activation (A02) d'au moins une interface transactionnelle (I1, I2, 13, etc.) associée à ladite au moins une entrée (Rcrd1, RcdN) en fonction dudit au moins un score de confiance ($P_{sc1}$,..., $P_{scN}$).

Dans le cadre de la présente, on comprend qu'une interface transactionnelle représente soit une interface physique de réalisation de la transaction (puce, bande magnétique, sans contact), soit un mode d'exploitation particulier de cette interface physique (par exemple carte sans contact ou smartphone utilisant l'interface sans contact). Dans la cadre de la présente, un score de confiance ($P_{sc1}$, ... $P_{scN}$) peut être la somme (ou toute autre opération pertinente, comme le produit ou l'utilisation successive, la soustraction ou la disjonction) de plusieurs (composantes de) scores de confiance intermédiaires, comme cela est divulgué par la suite: un score de confiance associé au nombre de portions de doigts visibles sur les enregistrements et/ou un score de confiance associé à la détermination du dispositif transactionnel. Les déterminations des composantes du score de confiance, lorsque le score se calcule de cette manière, ne sont pas nécessairement simultanées ou concomitantes. Une première composante peut être calculée à un certain moment et une deuxième composante à un autre moment: l'une des composantes peut par exemple servir à exclure l'utilisation d'une interface tandis que l'autre composante peut servir à conforter un choix d'interface, affectant par conséquent le score de confiance.

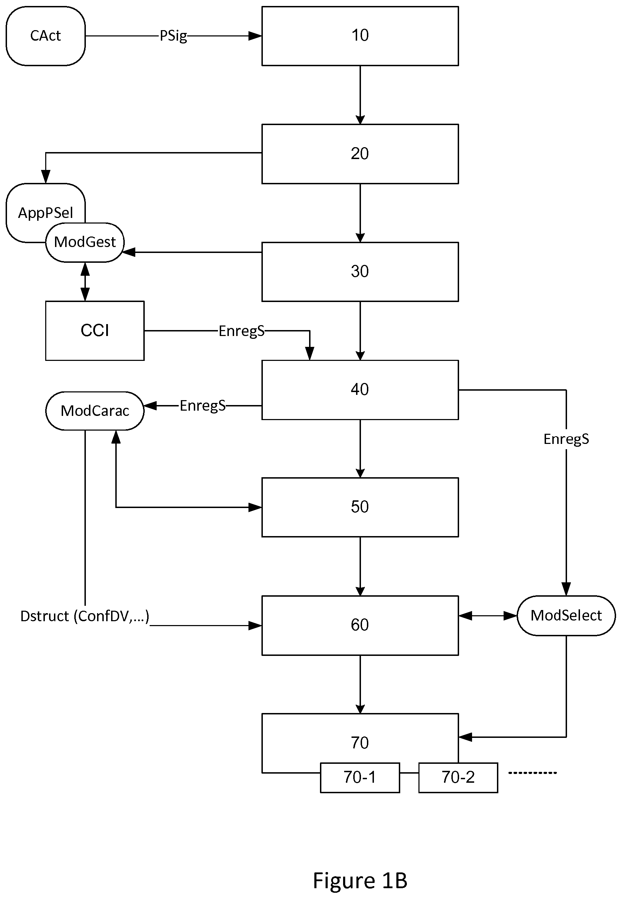

Une méthode mise en œuvre dans le cadre de cette technique, pour effectuer un paiement, est présentée en relation avec la figure 1B, dans un mode de réalisation particulier, non limitatif. Dans cet exemple, une approche disjonctive est utilisée. La méthode débute, dans cet exemple par une réception (10) au sein d'un terminal, en provenance d'un composant d'activation (CAct), d'un signal (par exemple un signal de paiement) (PSig). Le composant d'activation (CAct) peut par exemple se trouver physiquement au sein d'une caisse enregistreuse connectée au terminal par l'intermédiaire d'une interface (filaire ou sans fil). Le composant d'activation peut également physiquement se trouver au sein d'un terminal hybride ayant à la fois le rôle de caisse enregistreuse et de terminal, chacun des deux rôles étant exercé par des composants (processeur, mémoire) différents ou des composants communs ayant des logiques de fonctionnement différentes en fonction du rôle exercé (par exemple le rôle de caisse enregistreuse est exercé en mode non sécurisé, tandis que le mode terminal de paiement est exercé en mode sécurisé). Quoi qu'il en soit, le signal de paiement est reçu par le terminal et provoque (20) le chargement, au sein du terminal, d'une application de sélection de mode de paiement (App-PSel). Cette application de sélection de mode de paiement (AppPSel) comprend un module de gestion (Mod-Gest) d'un composant optique (CCI). Le composant de captation d'image (CCI), positionné en face avant du terminal de paiement (c'est-à-dire par exemple à proximité de l'écran d'affichage du terminal de paiement).

Ainsi, à la réception du signal de paiement (PSig), l'application de sélection automatique de mode de paiement (AppPSel) lance (30) le module de gestion (ModGest) du composant optique (CCI). Ce module de gestion récupère (40) un ou plusieurs enregistrements (EnregS) (en fonction des modes de réalisation) provenant du composant optique (CCI).

Chaque enregistrement (image) est transmis à un module de caractérisation (ModCarac). Le module de caractérisation (ModCarac) effectue (50), sur les enregistrements reçus, des traitements de caractérisation dans lesquels sont recherchés des éléments caractéristiques de la méthode de paiement qui est employée par l'utilisateur pour effectuer le règlement de ses achats en lien avec le terminal de paiement. Ces éléments caractéristiques comprennent notamment la présence et/ou la position d'une carte de paiement, la présence et/ou la position d'un terminal de communication (de type smartphone). Plus particulièrement, *quatre cas de figure (au moins)* sont recherchés et caractérisés par le module de caractérisation, correspondant à trois interfaces transactionnelles. Ces quatre cas de figure sont détaillés par la suite : ils correspondent à quatre scores de confiance ($P_{sc1}$,... $P_{scN}$) associés à quatre entrées (Rcrd1,..., RcdN) de la structure de données d'activation d'interface.

Le module de caractérisation (ModCarac) fourni (60) les résultats des calculs effectués (les composantes des scores de confiances) à un module de sélection (ModSelect) de mode de paiement sous la forme d'une structure de données (DStruct) (éventuellement identique à la structure de donnée d'activation) qui comprend pour au moins un des quatre cas de figure, une valeur de confiance (ConfDV) (valeur qui peut être strictement égale à la composante de score de confiance précédemment mentionnée, ou être adaptée en fonction des circonstances, par d'autres facteurs). Cette valeur de confiance (ConfDV) est représentée sous la forme d'une probabilité (valeur comprise entre 0 et 1). Ce module de sélection (ModSelect) prend en entrée les résultats de la caractérisation (DStruct) et optionnellement des images (EnregS) du module de gestion (ModGest) du composant de captation d'image et effectue (70) la sélection du mode de paiement en fonction des valeurs de confiance associées à chaque cas de figure possible.

Le module de sélection (ModSelect) dispose de valeurs de confiance transmises par le module de caractérisation (ModCarac) (par exemple des valeurs de confiance issues de la caractérisation du nombre de doigts sur la carte ou encore de la position et de l'orientation de la carte). A l'aide des images (EnregS) du module de gestion (ModGest) du composant de captation d'image, le module de de sélection (ModSelect) peut, comme cela est explicité par la suite, tenter de détecter le type de moyen de paiement employé pour affiner le score de confiance associé à un cas de figure (et donc à une entrée de la structure de données).

Lorsque plusieurs cas de figure (modes de paiement probables) sont présents dans les résultats issus du module de caractérisation (DStruct), le module de sélection (ModSelect) procède par itération, chaque itération correspondant à l'activation (70-1, 70-2, etc...) d'un mode de paiement correspondant à un cas de figure identifié. Par exemple, lorsque sont identifiés deux cas de figure potentiels (paiement sans contact avec un score de confiance de 0,8 et paiement carte à puce avec un score de confiance de 0,6), le module de sélection :

- commande l'activation du module de paiement sans contact; puis se met en attente d'une confirmation d'initiation de paiement sans contact en provenance du module de paiement sans contact, durant un temps prédéterminé ;

Lorsque le temps imparti est écoulé (1 seconde par exemple) et qu'aucune procédure de paiement sans contact n'a débuté :

- commande l'activation du module de paiement carte à puce ; puis se met en attente d'une confirmation d'initiation de paiement carte à puce en provenance du module de paiement idoine, durant un temps prédéterminé (et/ou jusqu'à présentation d'une carte à puce dans le lecteur de carte à puce du terminal de paiement).

Ainsi, le module de sélection est à même de gérer les différentes interfaces de paiement du terminal de paiement. Comme indiqué précédemment, il est ainsi possible d'une part de réduire la consommation électrique de ces dispositifs de paiement (particulièrement important lorsque ceux-ci sont des dispositifs mobiles et/ou nomades) et d'autre part d'augmenter de manière importante la sécurité du terminal de paiement et de ses interfaces de paiement en n'activant pas les interfaces qui n'ont pas besoin de l'être. Cette mise en œuvre sous une forme disjonctive est purement illustrative, et permet de montrer que l'on tente d'abord de déterminer quel moyen de paiement est utilisé (à l'aide du module de caractérisation) pour ensuite tenter de reconnaitre le moyen de paiement (avec le module de sélection). Il aurait également été possible de réaliser ces deux opérations en parallèle, à l'aide du module de caractérisation, en mettant en œuvre une puissance de calcul plus importante.

Ainsi, une pluralité d'interfaces transactionnelles peut être utilisée. Chaque interface se voit calculer et attribuer un score de confiance, qui représente une valeur de probabilité de la volonté de l'utiliser (par l'utilisateur qui tient le dispositif en main). Les interfaces peuvent être activées successivement suivant l'ordre décroissant de leurs scores de confiance attribués. On peut noter également que dans le cas où une seule et unique interface transactionnelle serait disponible, le procédé revendiqué pourrait également être mis en œuvre, en limitant l'activation à cette seule interface. Cependant, comme explicité précédemment, en fonction du dispositif transactionnel reconnu (carte sans contact, terminal de communication NFC), le mode de fonctionnement de l'interface serait immédiatement reconnu, impliquant également une optimisation de la consommation, bien que potentiellement moindre que lorsque le terminal transactionnel dispose de plusieurs interfaces transactionnelles.

5.2. Détection de la préhension de l'utilisateur sur le moyen de paiement

Parmi les éléments qui participent à la détermination d'un score de confiance pour un moyen de paiement donné, les inventeurs ont notamment identifié le nombre de doigts et/ou partie de la main de l'utilisateur présents dans les images (enregistrements) issus du composant optique.

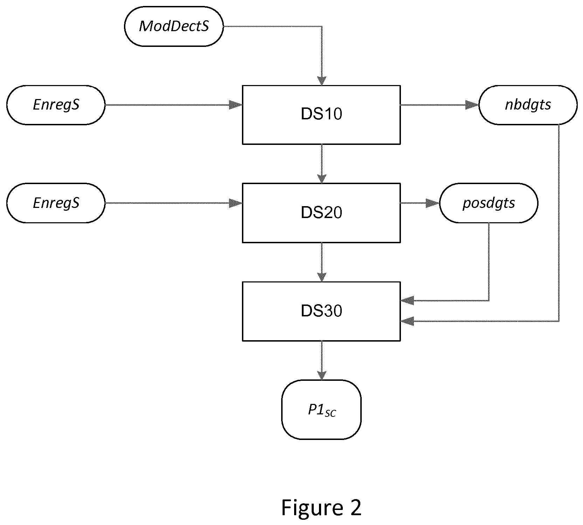

Ainsi, dans un mode de réalisation, combinable totalement ou partiellement (ou indépendamment) des autres modes de réalisation et variantes présentés, et décrit en relation avec la figure 2, au moins une partie $P1_{sc}$ (voire l'intégralité) du score de confiance est calculée en fonction de la présence et/ou de la position d'un ou de plusieurs doigts ou extrémités de doigts dans l'image capturée (les images ou la vidéo). En effet, les inventeurs sont partis du constat que le moyen de paiement utilisé (ou la fonction de paiement utilisée dans un moyen de paiement multi-technologies) est fortement lié à la position des doigts de l'utilisateur. Or, bien que des différences morphologiques existent, principalement au niveau de la taille, de la couleur et de la forme, la majeure partie des extrémités de doigts se ressemblent de manière très importante, dans des tolérances très acceptables d'un point de vue traitement numérique (notamment par exemple à l'aide d'un processus impliquant l'utilisation d'un ou de plusieurs réseaux de neurones). Ainsi, dans ce mode de réalisation, un module de détection spécifique (ModDectS), recherchant et/ou détectant la position des doigts dans une (ou plusieurs) images est en charge de fournir une partie $P1_{sc}$ du score de confiance. Cette partie est indépendante de la détection et/ou de la reconnaissance du moyen de paiement en tant que tel.

Plus particulièrement, le calcul de cette partie du score de confiance est directement lié aux cas de figure (et donc au nombre d'entrées de la structure de données d'activation d'interfaces) qu'il est nécessaire de classer les uns par rapport aux autres. Globalement le l'étape de détermination d'un score de confiance $P1_{sc}$ comprend, pour une image courante et pour une entrée (Rcrd1, RcdN) courante de la structure de données d'activation d'interfaces transactionnelles comprend :

- détermination (DS10) d'un nombre de portions de doigts (nbdgts) présents sur ladite image courante, délivrant une première valeur de nombre de portions de doigts (nbdgts) ;
- détermination (DS20) d'une position de portions de doigts (posdgts) présents sur ladite image courante délivrant une deuxième valeur de position de portions de doigts (nbdgts) ;
- affectation (DS30) d'un score ($P1_{sc}$) à l'entrée (Rcrdl, RcdN) courante de la structure de données d'activation d'interfaces transactionnelles en fonction des première et deuxième valeurs précédemment déterminées.

Les deux étapes de détermination (D810, D820), peuvent être mise en œuvre indépendamment ou conjointement (et dès lors en constituer qu'une seule et même étape).

Ainsi, si l'image (ou la série d'images) permettent de détecter une seule portion de doigt (un index) situé latéralement sous la carte, la probabilité que la carte soit utilisée pour être insérée dans le lecteur de cartes à puce est importante. En effet, pour pouvoir insérer la carte dans le lecteur de carte à puce, il est nécessaire de la tenir fermement et de la guider avec précision, geste qui demande l'utilisation du pouce sur la face supérieure de la carte (là où se situe la puce de la carte à puce), tout en plaçant l'index sous celle-ci afin de pouvoir la maintenir. Par ailleurs, du point de vue de l'image recueillie par le terminal (on rappelle que de dispositif de captation d'image à une position fixe, en face avant du terminal), les doigts sont positionnés dans une portion bien définie de l'image (en bas de celle-ci si on considère que le dispositif de captation oriente l'image pour que le lecteur de carte à puce soit placé en bas de l'image). Le doigt reconnu (généralement l'index) est donc placé en bas de l'image (ou de la série d'image), impliquant probablement l'utilisation du lecteur de carte à puce.

A l'inverse, lorsque l'utilisateur souhaite utiliser l'interface sans contact de la carte de paiement, les inventeurs ont constaté que l'utilisateur à tendance à placer ses doigts de la même manière que pour l'utilisation du lecteur de carte à puce, avec cependant la différence notable du fait que ces doigts sont placés à gauche ou à droite de l'écran, et ce principalement du fait qu'il est nécessaire, pour effectuer un tel paiement, de « coller » (poser) la carte sur ou à proximité de l'écran du terminal. Or le terminal étant principalement de forme allongée, il est nécessaire d'orienter la carte perpendiculairement à celui-ci pour pouvoir l'apposer sur ou à proximité de l'écran du terminal. Ainsi, dans ce cas de figure, la position des doigts sur l'image (ou sur la série d'images) est située à gauche ou à droite de celle-ci (à nouveau, par rapport au repère défini par le dispositif de captation d'image du terminal). Une telle position implique probablement l'utilisation de l'interface de paiement sans contact à l'aide d'une carte de paiement disposant de cette technologie.

Lors de l'utilisation de la bande magnétique (par exemple pour une carte de crédit de type américaine utilisant encore ce moyen de paiement, Amex® ou encore les cartes de paiement de magasin (type Galerie Lafayette®, Printemps®, Bloomingdale®, Macy's®, etc.)), la carte est présentée au lecteur magnétique sur la tranche, impliquant une quasi invisibilité de celle-ci, mais au contraire une visibilité très nette d'une part de l'index qui maintient la tranche de la carte et d'autre part du pouce et du majeur qui enserre celle-ci afin de lui imprimer un mouvement de translation pour que la bande magnétique puisse être lue par la tête magnétique du lecteur. Ainsi, dans ce cas de figure, la position et le nombre de doigts implique probablement l'utilisation de l'interface de lecture de bande magnétique.

L'utilisation d'un terminal de communication (de type smartphone), pour effectuer un paiement est en très nette progression. Cette utilisation nécessite, pour le terminal de paiement, qu'il adopte un comportement différent de celui adopté lorsqu'une carte de paiement est utilisée (il n'entre pas dans l'objet de la présente d'expliciter les détails de ces différences de traitement, cependant, le terminal de paiement n'étant pas une carte de paiement, il ne bénéficie pas de la même chaine de traitement pour la mise en œuvre de ce paiement, au sein du terminal de paiement). Un terminal de communication est un objet plus lourd qu'une carte de paiement. Par ailleurs, il utilise principalement l'interface de communication sans contact pour émettre et recevoir des données vers et en provenance du terminal de paiement. Dès lors l'utilisateur présente son terminal à plat, en le tenant généralement à une main, en positionnant le pouce sur un côté du terminal et les quatre autres doigts sur l'autre côté. Ainsi, dans ce cas de figure, la position et le nombre de doigts implique probablement l'utilisation de l'interface de lecture sans contact, dans le cadre d'une transaction de paiement réalisée à l'aide d'un terminal de communication de type smartphone.

Ainsi, les cas de figure possibles sont associés aux scores émanant de la détection et de la reconnaissance des doigts ou portions de doigts issus de la captation d'images réalisée par le module de caractérisation. Comme la détection et la reconnaissance n'est pas nécessairement précise ou à tout le moins comme la caractérisation n'est pas indéniable, un score est associé à chaque cas de figure identifié, ce score étant, comme indiqué précédemment, utilisé pour activer les différentes interfaces de paiement les unes après les autres, en commençant par le score le plus élevé (c'est-à-dire la situation la plus probable).

Techniquement, la mise en œuvre de la détection et de la reconnaissance est réalisée par tout moyen approprié, en fonction des capacités de traitement du terminal ou du dispositif utilisé pour mettre en œuvre la méthode proposée. La détection et la reconnaissance peut comprendre, préalablement, une correction de l'image (ou de la série d'image) en fonction de la position connue du capteur optique de manière à obtenir une image corrigée (spatialement et/ou au niveau des couleurs et/ou des contrastes) pour obtenir une image dans des conditions de traitement de référence. Les corrections mises en œuvre peuvent par exemple comprendre le changement de référentiel, la rotation, la translation, le passage en noir et blanc (ou niveau de gris) et tenir compte des caractéristiques du capteur d'image et notamment de la lentille utilisée (lentille de type fisheye) qui permet d'obtenir une image panoramique, mais déformée. L'image obtenue dans les conditions de références, appelée image rectifiée, est dans ce cas de figure l'image sur laquelle la caractérisation est effectuée.

Dans au moins un mode de réalisation, la détection et/ou la reconnaissance est effectuée à l'aide d'au moins un réseau de neurones, spécifiquement entraîné au préalable pour un ou plusieurs cas de figure tels que ceux précédemment décrits, et d'autres cas de figures non nécessairement décrits.

De manière complémentaire ou substitutive, une technique basée sur l'utilisation de gabarits peut également être mise en œuvre. Plus particulièrement, la caractérisation du nombre et de la position des doigts dans l'image (ou la série d'images) est déterminée totalement ou partiellement par l'utilisation de gabarits (modèles) statiques ou dynamiques. L'image d'origine (ou l'image rectifiée) est comparée à ces gabarits. L'image et les gabarits comprennent par exemple des points de repère communs (i.e. emplacement de luminaires au plafond par exemple, ou autres caractéristiques permettant de disposer de points connus, fixes ou variables), et le gabarit est comparé à l'image (par exemple par superposition, différence). L'image résultante de la comparaison est alors analysée: notamment une comparaison entre la présence ou l'absence de doigts ou de portions de doigts est réalisée sur l'image obtenue.

Ainsi, dans ce mode de réalisation, un gabarit comprend des points de repère connus. Les points de repère connus sont utilisés pour faire correspondre l'image du capteur au gabarit. Le gabarit comprend des zones d'intérêt (par exemple des zones où les doigts peuvent se trouver). Une fois que l'image est ajustée au gabarit, on extrait l'information comprise dans ces zones d'intérêt pour déterminer la présence ou l'absence de doits ou de portions de doigts. En cas de correspondance (totale ou partielle) une valeur est attribuée à ce gabarit, lequel correspond à un ou plusieurs cas de figures. L'ensemble des valeurs attribuées pour des gabarits correspondants à un cas de figure permet d'obtenir un score correspondant à ce cas de figure (ou une composante de ce score). Cette opération est réalisée pour tous les gabarits disponibles (plusieurs gabarits peuvent correspondre à un seul cas de figure), et ce pour tout ou partie des cas de figures (et donc au nombre d'entrées de la structure de données d'activation d'interfaces). Les gabarits statiques peuvent être préconfigurés dans le terminal.

Un gabarit dynamique dépend de l'utilisation en conditions réelles, du terminal, et peuvent être déterminés lors de la première utilisation du terminal (ou de sa configuration), par exemple pour se rapprocher des comportements d'utilisation locaux, associés à des situations particulières. Le fonctionnement des gabarits dynamiques est identique, dans leur principe, à ceux des gabarits statiques.

Comme explicité, le module de détection spécifique peut mettre en œuvre à la fois une détection intelligente, basée sur des réseaux de neurones et une détection basée sur les gabarits et effectuer une combinaison des résultats obtenus, et ce afin de disposer de résultats plus précis, si nécessaire.

### 5.3. Détection du type de moyen de paiement

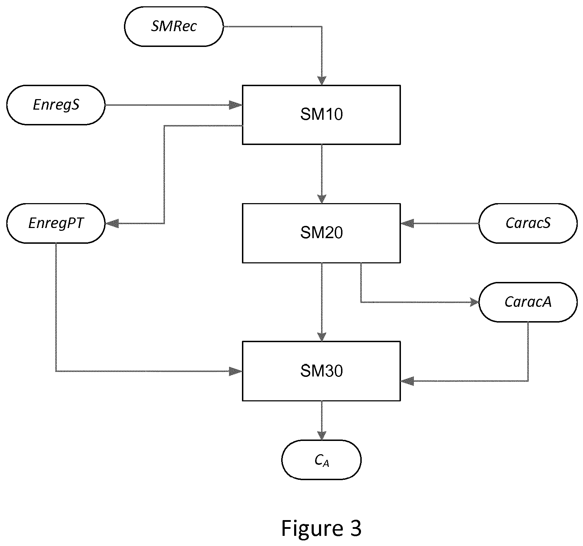

Dans au moins un mode de réalisation, en plus (ou à la place) d'au moins un des cas de figure recherché pour la sélection du mode de paiement, le module de sélection obtient au moins une image (et/ou vidéo) en provenance du module de gestion du composant de captation d'image. Cette ou ces images sont utilisées par le module de sélection pour effectuer un test de reconnaissance, décrit en relation avec la figure 3. L'objet de ce test de reconnaissance est de permettre un prétraitement du moyen de paiement qui est utilisé (par un module de prétraitement). Par exemple, le module de sélection s'attache à reconnaitre le type de carte employé pour effectuer le paiement. Dans un autre exemple, le module de détection s'attache à reconnaitre le type de carte de paiement utilisé (par exemple une carte de crédit, une carte de débit). Encore dans un autre exemple, le module de sélection détecte et reconnait l'émetteur de la carte (par exemple Visa®/Mastercard®/Amex®. Encore dans un autre exemple le module de sélection reconnaît un type de carte (par exemple carte de fidélité, carte de paiement, etc.).

Plus particulièrement, en relation avec la figure 3, la ou les images du moyen de paiement (EnregS) sont transmises à un sous module de reconnaissance (SMRec) qui va par exemple effectuer la détection et la reconnaissance de certaines caractéristiques de l'objet présenté devant le terminal de paiement. Le procédé mis en œuvre, pour une image donnée, est le suivant et il comprend :

- une étape de prétraitement (SM10) de l'image transmise (Enreg) délivrant une image prétraitée (EnregPT) (par exemple rectifiée par rapport à un contexte géométrique connu du capteur optique - correction de parallaxe, passage en noir et blanc - ou niveau de gris, etc.) ;
- une étape d'obtention (SM20), parmi un ensemble de caractéristiques (CaracS), d'au moins une caractéristique (CaracA) à rechercher ;
- une étape de recherche (SIVI30) de ladite au moins une caractéristique (CaracA) sur ladite image traitée (EnregPT) délivrant une valeur représentative (CA) de la présence de ladite au moins une caractéristique (CaracA).

La valeur représentative de la caractéristique $(C_A)$ est ensuite utilisée pour effectuer un calcul de score de confiance relatif au type de carte (ou de dispositif transactionnel) qui est probablement approché par l'utilisateur, comme décrit par la suite.

Dans le cas d'un logo, par exemple du logo « sans contact », qui est présent en face avant de la carte, l'information de présence ou d'absence de ce logo est conservée en mémoire pour être par la suite utilisée pour la détermination des scores de confiances associées aux différents cas de figure étudiés.

On note $c_j$ une caractéristique recherchée, $c_j$ appartenant à un ensemble *EGRech* de caractéristiques recherchées *[$c_0$,... $c_n$]*, chaque caractéristique étant associée à un poids. Cet ensemble de caractéristiques recherchées *EGRech* comprend plusieurs sous-ensembles de caractéristiques *[$SeRech_0$,..., $SeRech_n$]*, disjoints ou non dans lesquels les caractéristiques sont distribuées. Une caractéristique $c_j$ peut appartenir à plusieurs sous-ensembles, tandis qu'une caractéristique $c_j$ peut n'appartenir qu'un un seul ensemble.

Une partie $P_{2SC}$ du score de confiance est calculée en fonction d'un score pondéré lié à l'absence ou à la présence des caractéristiques, pour une partie au moins des sous-ensembles *[$SeRech_0$,..., $SeRech_n$]*. Par exemple, si *$SeRech_0$* correspond aux caractéristiques d'une carte de paiement multi technologie (carte à puce, sans contact et bande magnétique) émise par Visa®, les caractéristiques associées sont :

- $c_0$ (carte) : rechercher et détecter la présence d'une carte sur l'image ;
- $c_1$ (puce) : rechercher et détecter la présence d'une puce sur l'image ;
- $c_2$ (sans contact) : rechercher et détecter la présence du logo sans contact sur l'image ;
- $c_3$ (bande) : rechercher et détecter la présence d'une bande magnétique sur l'image ;
- $c_4$ (Visa®) : rechercher et détecter la présence du logo Visa® sur l'image.

La probabilité qu'il s'agisse d'une carte de paiement multi technologie (carte à puce, sans contact et bande magnétique) émise par Visa® est définit par l'équation :

$$P_{SeRech0} = \frac{\sum_{i=0}^{4} R_{c_i} \times w_{c_i}}{\sum_{i=0}^{4} w_{c_i}}$$

Dans laquelle :

- $R_{ci}$ est un score de reconnaissance et/ou de détection de la caractéristique $c_i$ dans l'image ;
- $w_{ci}$ est le poids associé à cette caractéristique $c_i$.

Pour Mastercard® ou un autre émetteur de carte, la caractéristique $c_4$ précédente est remplacée par une recherche et détection de logo équivalente. En conditions opérationnelles, plusieurs caractéristiques sont recherchées et/ou reconnues en temps réel en série ou en parallèle, permettant ainsi d'attribuer des scores échelonnés : les caractéristiques précédentes c0 à $c_3$ peuvent d'abord être recherchées, pour obtenir un premier score de confiance, puis les caractéristiques $c_4$ (relative à l'émetteur) peuvent être recherchées par la suite, par exemple. Cela permet d'étaler la charge de calcul dans le temps et de disposer des informations les plus importantes en début de traitement.

En fonction des modes de réalisation mis en œuvre, le score $R_{ci}$, de reconnaissance et/ou de détection de la caractéristique $c_i$ dans l'image est obtenu par la mise en œuvre d'un composant ou d'un module logiciel destiné à une ou plusieurs caractéristiques. Comme explicité précédemment, avant que l'image ne soit fournie à l'un de ces modules ou composants, elle peut faire l'objet d'un ensemble de prétraitements, par exemple des traitements visant à rectifier l'image, a la recadrer. Ces traitements préparatoires ont principalement pour objectif de placer les modules de reconnaissance et/ou de détection dans des conditions plus favorables pour que les calculs à effectuer sur l'image en vue de la détection de la caractéristique soient les plus rapides possibles.

5.4. Dispositif de mise en œuvre

La figure 4 présente la structure, de manière schématique, d'un terminal selon la présente technique. Plus précisément, la figure 4 présente le terminal qui comprend au moins un microprocesseur, auquel est associée d'une part une mémoire vive, par exemple au moyen d'un bus, et d'autre part une mémoire non volatile (par exemple du type EEPROM), au travers un bus également. Dans une variante, le terminal est équipé d'un deuxième processeur, par exemple un processeur sécurisé, ainsi que d'une mémoire, également sécurisée (mémoire volatile et/ou mémoire non volatile).

Le terminal peut échanger des données avec des dispositifs extérieurs (c'est-à-dire des dispositifs transactionnels comme une carte sans contact ou un dispositif sans contact nfc) au moyen de plusieurs modules de communication (également appelés modules transactionnels). Plus précisément, un premier module de communication comprend une tête de lecture magnétique, un deuxième module de communication comprend une interface de contacts électriques (par exemple conformément à la norme ISO/IEC 7816). Un troisième module de communication peut être compatible avec au moins l'une quelconque des normes suivantes : ISO/CEI 18092, ISO/CEI 14443-1 à ISO/CEI 14443-4 et NDEF.

Dans un mode de réalisation, un (ou plusieurs) capteurs optiques (capteur d'images CCD) sont utilisés, en conjonction avec un module de commande. Un tel module de commande est relié, via des bus, à au moins un capteur optique, comme explicité précédemment et par exemple, aux premier et deuxième et troisième modules de communication, permettant ainsi de commander de manière directe ces modules de communications en fonction de la donnée obtenue (enregistrements images/vidéo). Le module de commande comprend les composants, modules et application décrits précédemment. Selon une variante, un module de détection peut comprendre une pluralité de capteurs, et une pluralité de modules de commande.

Selon une variante, le terminal comprend un unique module de commande de tous les modules de communications, et une pluralité de capteurs répartis à proximité des modules de communications. Un tel module de commande étant en interaction avec la totalité des capteurs. Dans un autre mode de réalisation, une application qui est exécutée sur un terminal coordonne le fonctionnement des modules de commande.

Plus généralement, quel que soit le mode de réalisation, l'invention consiste à rajouter un capteur de reconnaissance et ou de caractérisation de dispositif transactionnel dans la zone de lecture des modules de communication. Un capteur optique peut être utilisé et permet par rapport à d'autres techniques de détection pour caractériser le dispositif transactionnel. Ce capteur de type optique permet :

- la détection de la position du dispositif transactionnel (via entre autres, des moyens de reconnaissance de forme, permettant d'éviter de confondre une position d'une main, ou d'autre objet, avec une position d'un dispositif transactionnel).
- de mettre en action le module de communication adéquat (par exemple le lecteur sans contact) uniquement quand cela est nécessaire.
- de permettre la cohabitation des différents types de lecteurs dispositifs transactionnels : piste, puces à contacts, puces sans contact.
- un gain significatif sur l'autonomie des terminaux portable équipée de lecteur de carte sans contact.

Dans une variante, un module de commande peut aussi commander un capteur afin de préciser la position du dispositif transactionnel qui a été détectée une première fois. Quoi qu'il en soit, on présente, en relation avec la figure 4, un mode de réalisation d'un dispositif de caractérisation de dispositif transactionnel tel qu'exposé précédemment selon l'invention.

Un tel dispositif comprend une mémoire 41 constituée d'une mémoire tampon, une unité de traitement 42, équipée par exemple d'un microprocesseur P, et pilotée par le programme d'ordinateur 43, mettant en œuvre le procédé d'appairage selon l'invention. Un tel dispositif peut également comprendre une mémoire sécurisée constituée d'une mémoire tampon et d'une mémoire non volatile, une unité de traitement sécurisée, équipé par exemple d'un microprocesseur, et pilotée par le programme d'ordinateur 43 ou une partie sensible de celui-ci, mettant en œuvre le procédé de caractérisation selon l'invention.

À l'initialisation, les instructions de code du programme d'ordinateur 43 sont par exemple chargées dans une mémoire RAM avant d'être exécutées par le processeur de l'unité de traitement 42. L'unité de traitement 42 reçoit en entrée au moins une information I, telle que des enregistrements en provenance du capteur optique relié au dispositif de caractérisation. Le microprocesseur de l'unité de traitement 42 met en œuvre les étapes du procédé de caractérisation décrit précédemment, selon les instructions du programme d'ordinateur 43, pour délivrer une information traitée T, telle les score de confiance associées aux différents cas de figure (interfaces de traitement) à utiliser. Pour cela, le dispositif comprend, outre la mémoire tampon 41, les moyens préalablement décrits, et notamment les modules et composants présentés précédemment. Ces moyens peuvent être directement intégrés au dispositif de caractérisation, ou adjoints à un terminal, tel qu'un terminal de paiement. Ces moyens sont pilotés par le microprocesseur de l'unité de traitement 42. Les composants et moyens décrits peuvent être des composants sécurisés, des composants de confiance ou des composants mixant les structures sécurisées et les structures non sécurisées.

Comme cela a été parfaitement compris, le procédé de caractérisation tel qu'il a été précédemment décrit peut comprendre un premier sous procédé de caractérisation basé sur le comptage et le positionnement d'un nombre de doigts d'un utilisateur et un deuxième sous procédé de caractérisation qui consiste à déterminer le dispositif transactionnel utilisé, ces deux procédés pouvant être mis en œuvre indépendamment l'un de l'autre.

## Revendications

1. Procédé de détermination d'un type de dispositif transactionnel utilisé par un utilisateur pour effectuer une transaction de paiement avec un terminal de paiement, le procédé étant mis en œuvre par le terminal de paiement comprenant un processeur de traitement de données, une mémoire, un capteur optique (CCI) et un ensemble d'une pluralité d'interfaces physiques de paiement, le procédé comprenant :

   - une étape d'obtention d'au moins un enregistrement (EnregS) d'au moins une image issue du capteur optique (CCI), le enregistrement étant obtenu lorsque l'utilisateur maintient un dispositif transactionnel en main ;
   - une étape de détermination de scores de confiance ($P_{sc1}$,... $P_{scN}$) relatifs à chaque interface physique de paiement fonction d'éléments présents dans l'enregistrement, chacun des scores de confiance ($P_{sc1}$,... $P_{scN}$) représentant une valeur de probabilité de volonté d'utiliser ladite interface physique de paiement par l'utilisateur tenant le dispositif transactionnel en main ; et
   - au moins une étape d'activation d'au moins une interface physique de l'ensemble d'interfaces physiques, en fonction desdits scores, de la valeur la plus importante à la valeur la plus faible.

2. Procédé selon la revendication 1, dans lequel l'étape de détermination des scores de confiance comprend au moins une des étapes suivantes :

   - détermination d'un premier score de confiance ($P1_{SC}$) associé à un nombre de portions de doigts présents sur au moins un enregistrement (EnregS) issu du capteur optique (CCI); et
   - détermination d'un second score de confiance ($P2_{SC}$) associé à au moins une caractéristique de dispositif transactionnel.

3. Procédé selon la revendication 2, dans lequel l'étape de détermination du premier score de confiance ($P1_{SC}$) comprend, pour une image courante de l'enregistrement (EnregS) et pour une entrée (Rcrd1, RcdN) courante d'une structure de données d'activation d'interfaces physiques, des étapes de :

   - détermination (DS10) d'un nombre de portions de doigts (nbdgts) présents sur ladite image courante, délivrant une première valeur de nombre de portions de doigts (nbdgts) ;
   - détermination (DS20) d'une position de portions de doigts (posdgts) présents sur ladite image courante, délivrant une deuxième valeur de position de portions de doigts (nbdgts) ; et
   - affectation (DS30) du premier score ($P1_{SC}$) à l'entrée (Rcrd1, RcdN) courante de la structure de données d'activation d'interfaces physiques en fonction des première et deuxième valeurs précédemment déterminées.

**4.** Procédé selon la revendication 2, dans lequel la détermination d'un premier score de confiance ($P1_{SC}$) met en œuvre au moins un réseau de neurones préalablement entrainé.

**5.** Procédé selon la revendication 2, dans lequel la détermination du premier score de confiance ($P1_{SC}$) met en œuvre au moins un gabarit de reconnaissance.

**6.** Procédé selon la revendication 2, dans lequel l'étape de détermination du second score de confiance ($P2_{SC}$) comprend, pour une image courante de l'enregistrement (EnregS), des étapes de :

- prétraitement (SM10) de l'image courante délivrant une image prétraitée (EnregPT) ;
- obtention (SM20), parmi un ensemble de caractéristiques (CaracS), d'au moins une caractéristique (CaracA) à rechercher ; et
- recherche (SM30) de ladite au moins une caractéristique (CaracA) sur ladite image prétraitée (EnregPT), délivrant au moins une valeur représentative (CA) de la présence de ladite au moins une caractéristique (CaracA) au sein de ladite image courante.

**7.** Terminal de paiement configuré pour mettre en œuvre le procédé selon l'une des revendications 1 à 6, et comprenant :

- un processeur de traitement de données,
- une mémoire et un capteur optique (CCI),
- un ensemble d'une pluralité d'interfaces physiques de transaction.

**8.** Terminal de paiement selon la revendication 7, comprenant :

- au moins un module d'obtention d'au moins un enregistrement (EnregS) d'au moins une image issue du capteur optique (CCI), l'enregistrement étant obtenu lorsque l'utilisateur maintien un dispositif transactionnel en main ;
- un module de détermination de scores de confiance ($P_{sc1},... P_{scN}$) en fonction d'éléments présents dans l'enregistrement, chacun des scores de confiance ($P_{sc1},... P_{scN}$) étant associé à au moins une interface physique de l'ensemble d'interfaces physiques ; et
- un module d'activation d'au moins une interface physique de l'ensemble d'interfaces physiques, en fonction desdits scores, de la valeur la plus importante à la valeur la plus faible. J

**9.** Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme, qui, lorsqu'elles sont exécutées par un processeur, mettent en œuvre le procédé selon l'une des revendications 1 à 6.

**Patentansprüche**

**1.** Verfahren zum Bestimmen eines Typs einer Transaktionsvorrichtung, die von einem Benutzer verwendet wird, um eine Zahlungstransaktion mit einem Zahlungsterminal durchzuführen, wobei das Verfahren von dem Zahlungsterminal implementiert wird, das einen Datenverarbeitungsprozessor, einen Speicher, einen optischen Sensor (CCI) und eine Reihe einer Vielzahl von physischen Zahlungsschnittstellen umfasst, wobei das Verfahren Folgendes umfasst:

- einen Schritt des Erhaltens mindestens einer Aufzeichnung (EnregS) von mindestens einem Bild aus dem optischen Sensor (CCI), wobei die Aufzeichnung erhalten wird, wenn der Benutzer eine Transaktionsvorrichtung in der Hand hält;
- einen Schritt zum Bestimmen von Vertrauenswertungen ($P_{sc1},... P_{scN}$) in Bezug auf jede physische Zahlungsschnittstelle in Abhängigkeit von Elementen, die in der Aufzeichnung enthalten sind, wobei jede der Vertrauenswertungen ($P_{sc1}, ... P_{scN}$) einen Wert der Wahrscheinlichkeit darstellt, dass der Benutzer, der die Transaktionsvorrichtung in der Hand hält, bereit ist, die physische Zahlungsschnittstelle zu nutzen; und
- mindestens einen Schritt zum Aktivieren mindestens einer physischen Schnittstelle der physischen Schnittstellenreihe in Abhängigkeit von den Wertungen, von dem höchsten Wert zu dem niedrigsten Wert.

**2.** Verfahren nach Anspruch 1, wobei der Schritt zum Bestimmen der Vertrauenswertungen mindestens einen der folgenden Schritte umfasst:

- Bestimmen einer ersten Vertrauenswertung ($P1_{sc}$) in Verbindung mit einer Anzahl von Fingerabschnitten, die auf mindestens einer Aufzeichnung (EnregS) vorhanden sind, die von dem optischen Sensor (CCI) stammt; und
- Bestimmen einer zweiten Vertrauenswertung ($P2_{Sc}$) in Verbindung mit mindestens einem Merkmal einer Transaktionsvorrichtung.

**3.** Verfahren nach Anspruch 2, wobei der Schritt zum Bestimmen der ersten Vertrauenswertung ($P1_{sc}$) für ein gängiges Bild der Aufzeichnung (EnregS) und für einen gängigen Eingang (Rcrd1, RcdN) einer Datenstruktur zur Aktivierung physischer Schnittstellen folgende Schritte umfasst:

- Bestimmen (DS10) einer Anzahl von Fingerabschnitten (nbdgts), die auf dem aktuellen Bild vorhanden sind, wodurch ein erster Wert für die Anzahl von Fingerabschnitten (nbdgts) geliefert wird;
- Bestimmen (DS20) einer Position von Fingerabschnitten (posdgts), die auf dem aktuellen Bild vorhanden sind, wodurch ein zweiter Positionswert von Fingerabschnitten (nbdgts) geliefert wird; und
- Zuweisen (DS30) des ersten Wertes ($P1_{sc}$) zu dem aktuellen Eingang (Rcrd1, RcdN) der Aktivierungsdatenstruktur von physischen Schnittstellen in Abhängigkeit von den zuvor bestimmten ersten und zweiten Werten.

4. Verfahren nach Anspruch 2, wobei das Bestimmen einer ersten Vertrauenswertung ($P1_{sc}$) mindestens ein zuvor trainiertes Neuronennetzwerk umsetzt.

5. Verfahren nach Anspruch 2, wobei das Bestimmen der ersten Vertrauenswertung ($P1_{sc}$) mindestens eine Erkennungsvorlage implementiert.

6. Verfahren nach Anspruch 2, wobei der Schritt zum Bestimmen der zweiten Vertrauenswertung ($P2_{sc}$) für ein aktuelles Bild der Aufzeichnung (EnregS) folgende Schritte umfasst:

- Vorverarbeiten (SM10) des aktuellen Bildes, das ein vorverarbeitetes Bild (EnregPT) liefert;
- Erhalten (SM20) von mindestens einem zu suchenden Merkmal (CaracA) aus einer Reihe von Merkmalen (CaracS); und
- Suchen (SM30) des mindestens einen Merkmals (CaracA) auf dem vorverarbeiteten Bild (EnregPT), das mindestens einen repräsentativen Wert (CA) für das Vorhandensein des mindestens einen Merkmals (CaracA) innerhalb des aktuellen Bildes liefert.

7. Zahlungsterminal, das so eingerichtet ist, dass es das Verfahren nach einem der Ansprüche 1 bis 6 implementiert, und umfassend:

- einen Datenverarbeitungsprozessor,
- einen Speicher und einen optischen Sensor (CCI),
- eine Reihe einer Vielzahl von physischen Transaktionsschnittstellen.

8. Zahlungsterminal nach Anspruch 7, umfassend:

- mindestens ein Modul zum Erhalten von mindestens einer Aufzeichnung (EnregS) von mindestens einem Bild aus dem optischen Sensor (CCI), wobei die Aufzeichnung erhalten wird, wenn der Benutzer eine Transaktionsvorrichtung in der Hand hält;
- ein Modul zum Bestimmen von Vertrauenswertungen ($P_{sc1}$, ... $P_{scN}$) in Abhängigkeit den in der Aufzeichnung vorhandenen Elementen, wobei jede der Vertrauenswertungen ($P_{sc1}$, ... $P_{scN}$) mindestens einer physischen Schnittstelle der physischen Schnittstellenreihe zugeordnet ist; und
- ein Modul zum Aktivieren mindestens einer physischen Schnittstelle der physischen Schnittstellenreihe, in Abhängigkeit von den Wertungen, von dem höchsten Wert zu dem niedrigsten Wert.

9. Computerprogrammprodukt, das von einem Kommunikationsnetzwerk heruntergeladen und/oder auf einem computerlesbaren und/oder mikroprozessorausführbaren Medium gespeichert werden kann, **dadurch gekennzeichnet, dass** es Programmcodeanweisungen umfasst, die, wenn sie von einem Prozessor ausgeführt werden, das Verfahren nach einem der Ansprüche 1 bis 6 umsetzen.

## Claims

1. A method for determining a type of transactional device used by a user to perform a payment transaction with a payment terminal, the method being implemented by the payment terminal comprising a data processing processor, a memory, an optical sensor (CCI), and a set of a plurality of physical payment interfaces, the method comprising:

- a step of obtaining at least one record (EnregS) of at least one image from the optical sensor (CCI), the record being obtained when the user holds a transactional device in their hand;
- a step of determining confidence scores ($P_{sc1}$,... $P_{scN}$) relating to each physical payment interface based on elements present in the record, each of the confidence scores ($P_{sc1}$,... $P_{scN}$) representing a probability value of willingness to use said physical payment interface by the user holding the transactional device in their hand; and
- at least one step of activating at least one physical interface of the set of physical interfaces, based on said scores, from the highest value to the lowest value.

2. The method according to claim 1, wherein the step of determining the confidence scores comprises at least one of the following steps:

- determining a first confidence score ($P1_{sc}$) associated with a number of finger portions present on at least one record (EnregS) from the optical sensor (CCI); and
- determining a second confidence score ($P2_{sc}$) associated with at least one transactional device characteristic.

3. The method according to claim 2, wherein the step of determining the first confidence score ($P1_{sc}$) comprises, for a current image of the record (EnregS) and for a current entry (Rcrd1, RcdN) of a physical interface activation data structure, steps of:

- determining (DS10) a number of finger portions (nbdgts) present on said current image, delivering a first value for the number of finger portions (nbdgts);
- determining (DS20) a position of finger portions (posdgts) present on said current image, delivering a second value for the position of finger portions (nbdgts); and
- assigning (DS30) the first score ($P1_{sc}$) to the current entry (Rcrd1, RcdN) of the physical interface activation data structure based on the first and second previously determined values.

4. The method according to claim 2, wherein the determination of a first confidence score ($P1_{sc}$) implements at least one previously trained neural network.

5. The method according to claim 2, wherein the determination of the first confidence score ($P1_{sc}$) implements at least one recognition template.

6. The method according to claim 2, wherein the step of determining the second confidence score ($P2_{sc}$) comprises, for a current image of the record (EnregS), steps of:

- preprocessing (SM10) the current image delivering a preprocessed image (EnregPT);
- obtaining (SM20), from a set of characteristics (CaracS), at least one characteristic (CaracA) to be searched for; and
- searching (SM30) for said at least one characteristic (CaracA) on said preprocessed image (EnregPT), delivering at least one value (CA) representative of the presence of said at least one characteristic (CaracA) within said current image.

7. A payment terminal configured to implement the method according to any of claims 1 to 6, and comprising:

- a data processing processor,
- a memory and an optical sensor (CCI),

- a set of a plurality of physical transaction interfaces.

8. The payment terminal according to claim 7, comprising:

- at least one module for obtaining at least one record (EnregS) of at least one image from the optical sensor (CCI), the record being obtained when the user holds a transactional device in their hand;
- a module for determining confidence scores ($P_{sc1}, \ldots P_{scN}$) based on elements present in the record, each of the confidence scores ($P_{sc1}, \ldots P_{scN}$) being associated with at least one physical interface of the set of physical interfaces; and
- a module for activating at least one physical interface of the set of physical interfaces, based on said scores, from the highest value to the lowest value.

9. A computer program product downloadable from a communication network and/or stored on a computer-readable medium and/or executable by a microprocessor, **characterized in that** it comprises program code instructions, which, when executed by a processor, implement the method according to any of claims 1 to 6.

Figure 1B

Figure 2

Figure 3

Figure 4

Figure 1A

**RÉFÉRENCES CITÉES DANS LA DESCRIPTION**

**Documents brevets cités dans la description**

- US 20120104094 A
- FR 1262728